# EUROPEAN PATENT APPLICATION

(11) **EP 1 041 175 A1**
(43) Date of publication of application: **04.10.2000**
(21) Application number: 99830184.0
(22) Date of filing: 31.03.1999
(51) Int. Cl.: C25B 1/06, C25B 9/00

(54) **Electrolytic apparatus for the production of gas**

(71) Applicant: Vaninetti, Augusto, 23025 Novate Mezzola (IT)
(72) Inventor: Vaninetti, Augusto, 23025 Novate Mezzola (IT)
(74) Representative: Lanzoni, Luciano

(57) **Abstract**

An electrolytic apparatus for the production of gasses comprises a cell (2) having electrically isolated walls (4), containing an electrolytic substance (6) and a plurality of planar electrodes (3), able to be polarised, electrically connected in series, isolated from the walls (4) of the cell (2) and positioned in such a way as to subdivide the cell (2) into a plurality of adjacent elementary cells (5). The planar electrodes (3) are traversed by one or more holes (9) obtained in an area lapped by the electrolytic substance (6) to put in communication the elementary cells (5) contiguous to each electrode (3) and to allow the electrolytic substance (6) to circulated between the elementary cells (5) and to cool the electrolytic cell (2).

## Description

The present invention relates to an apparatus for the production of gas of the type comprising a cell with electrically isolated walls containing an electrolytic substance with which a plurality of planar electrodes, able to be polarised, electrically connected to each other in series and isolated from the walls of the cell are in contact, the planer electrodes being so arranged in the cell as to divide it into a plurality of adjacent elementary cells.

As is well known, when some chemical substances in the molten state, or in liquid solution, are traversed within an electrolytic cell by an electrical current, normally direct, they give rise on the electrodes of the cell itself to the development of gaseous substances which can be collected and conveyed outside for further uses. In particular, if the substance subjected to electrolysis is water, sodium, potassium, lithium hydroxides and/or mixtures thereof, both in the pure state and in aqueous solution, it is possible to produce molecular oxygen on the positively charged electrode (anode), whilst a simultaneous development of hydrogen occurs on the negatively charged electrode.

It is also generally known that for each characteristic chemical composition of the electrolytic substance there is a given value of the electrical potential called thermodynamic decomposition potential, below which the yield of the electrolytic process would be severely degraded or would not even start. On the other hand, the process accelerates as said electrical potential increases, but it is necessary to comply with upper limits, imposed by the corresponding temperature increase, which decreases the yield. In water, for instance, the thermodynamic decomposition potential has a theoretical value of about 1.23 Volts.

To avoid having to lower to these values the output voltage of normal electrical generators employed in these applications, ordinary electrolytic apparatuses comprise several elementary cells in series. In particular, they comprise an electrolytic cell open at the top which presents a free surface for the electrolytic substance and which is divided into a multiplicity of elementary cells, not in mutual communication, arranged in series side by side and physically obtained by inserting, into the electrolytic cell itself, a plurality of metal electrodes isolated electrically from the walls of the cell and so shaped as to constitute vertical divider plates positioned parallel and bilaterally lapped, except of course the end ones, by the electrolytic substance contained in the cell. The electrodes are normally polarised by means of a simple connection of the end ones with a current generator. In this way all electrodes interposed thereto are polarised, according to a known polarisation phenomenon characteristic of metals, in such a way as to assume positive potential on one face and negative potential on the other face. The electrodes in fact behave as anodes for one elementary cell and as cathodes for the contiguous cell that shares the same electrode.

During the electrolytic process, in the interface area between the electrode and the electrolytic substance gasses are developed which, bubbling up through the electrolytic substance, ascend towards the top part of the cell where they are collected and conveyed towards the exterior of the apparatus.

The cells of these apparatuses have stainless steel metal walls to withstand the corrosion of the electrolytic substance, which are externally finned to cool the cell dispersing its heat outwards.

These apparatuses in practice have shown numerous drawbacks. Stainless steel does not by its nature present a particularly favourable heat exchange coefficient, so that the cooling efficiency is not particularly high. Moreover, between the central elementary cells and the end elementary cells there is a different heat dispersion capacity which also diversify the efficiency of individual elementary cells.

For all these reasons, and due to the fact that the elementary cells are rigorously separated and mutually independent, the apparatus requires an independent control of each elementary cell in terms of: its electrical operation; control over the level of electrolytic substance contained therein; and for the withdrawal of the gas produced therein.

For these purposes the means for controlling the individual cells are complex in their constructive realisation and of the operation of the facilities, implying evident disadvantages in terms of costs and reliability of the apparatus.

Overall, these traditional apparatuses have proved themselves to be poorly reliable, very complex and costly and, with a modest and heterogeneous efficiency of the individual cells, require, for each elementary cell, independent means for capturing and conveying the gasses, as well as a plurality of sensors of the level of the electrolytic substance contained in the individual cells, and lastly a plurality of independent ducts for replenishing the substance on each elementary cell.

The object of the present invention is to eliminate the aforementioned drawbacks by means of an apparatus of simple construction, low cost of production and operation and high operating efficiency.

In accordance with the invention, this object is attained by an apparatus of the kind indicated in the preamble to claim 1 wherein the planar electrodes are traversed by at least one hole obtained in an area lapped by the electrolytic substance to place in mutual communication the elementary cells contiguous to each electrode and to allow the electrolytic substance to circulate between the elementary cells and cool the electrolytic cell.

An apparatus of the aforesaid kind, according to the most accredited theories should not work, since all elementary cells should be considered in short circuit, but surprisingly not only is its operation amply confirmed by actual experimentation, but it provides considerable advantages.

The intercommunication of the elementary cells through the electrodes allows the circulation of a fluid current of electrolytic substance which cancels the short circuit effect between an elementary cell and the next one; which cools the elementary cells directly from within and which, operating with high heat exchange efficiency, makes the operating conditions of all elementary cells homogeneous, regardless of their position in the cell as a whole.

The fluid current also allows to transfer the gasses produced in the individual elementary cells together outside the cell as a whole and then from the cell to a gas separator. From the top of the separator the gasses are then collected and conveyed towards an external user, whilst the liquid substance is drawn from the base of the separator and recirculated inside the electrolytic cell.

The intercommunication between elementary cells advantageously allows to use a single level sensor for all elementary cells as well as to simplify the construction of the ducts for conveying the electrolytic substance and the gas produced which simply comprise two tubes that mutually connect the electrolytic cells and the separator.

The technical characteristics of the invention, according to the aforesaid purposes, can be clearly understood from the content of the claims that follows and its advantages shall be made more readily apparent in the detailed description that follows, made with reference to the accompanying drawings, which show an embodiment provided purely by way of non limiting example, wherein:

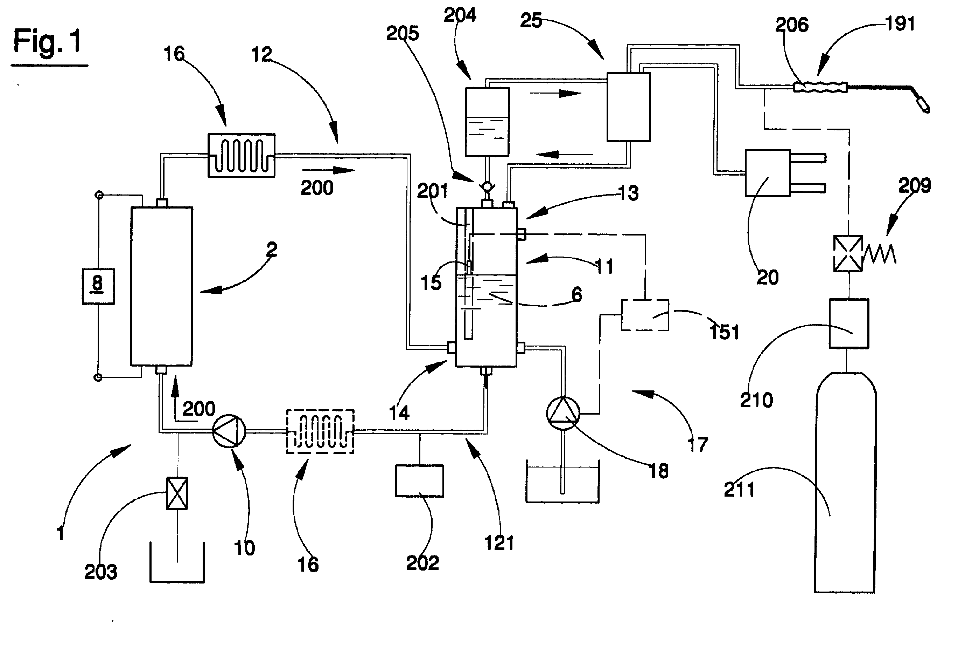

- Figure 1 shows an overall diagram of the equipment realised according to the invention;
- Figure 2 shows, in enlarged scale, a partial section of the electrolytic cell of the apparatus;
- Figure 3 is a cross section of the electrolytic cell of Figure 2 taken according to the line III-III.

In accordance to the figures of the accompanying drawings, the invention relates to an electrolytic apparatus 1 for the production of gas, preferably hydrogen and oxygen, starting from an electrolytic substance 6 in the liquid state. The apparatus 1 comprises an electrolytic cell 2, cylindrical with vertical axis and internally fitted with a plurality of planar electrodes 3, horizontal, metallic, vertically stacked for purposes that shall be made more readily apparent farther on, which are supported by rings 7 made of dielectric material interposed in such a way as to form in combination with the walls 4 of the electrolytic cell 2 a plurality of contiguous elementary cells 5 which are completely filled with electrolytic substance 6.

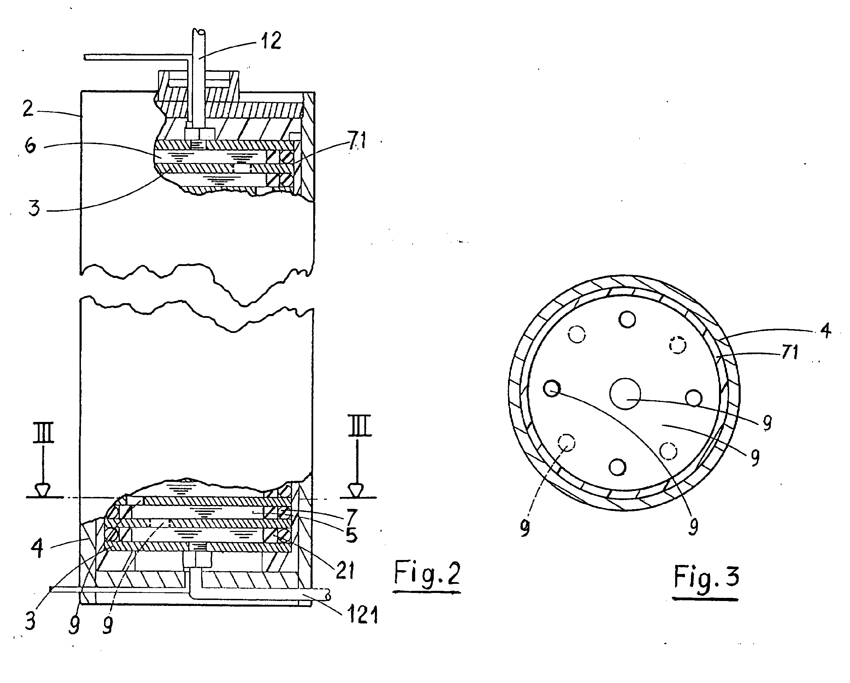

The electrodes 3 are made of stainless steel or steel externally plated with platinum or palladium to withstand corrosion due to contact with the electrolytic substance 6 that wets them. The electrodes 3 are electrically isolated both from each other by the aforementioned rings 7 made of dielectric materials, and with respect to the walls 4 of the electrolytic cell 2, which may be coated with an inner layer 71 of dielectric material (Fig. 2).

The planar electrodes 3 at the end of the complete electrolytic cell 2 are connected to a current generator 8, preferably generating direct current, and polarise all planar electrodes 3 interposed thereto thanks to a known electrical induction phenomenon. Since the elementary cells 5 are connected in series, they are present internally to the electrolytic cell 2 in its entirety always in such a number as to determine between the electrodes 3 related to a single elementary cell 5 a voltage drop equal at least to the thermodynamic decomposition potential of the electrolytic substance 6.

An important characteristic of the apparatus 1 can be noted in the fact the planar electrodes 3 (see Figures 2 and 3) are provided with one, or more, holes 9, obtained in an area lapped by the electrolytic substance. The holes 9 put in mutual communication all the elementary cells 5, contiguous by twos, of the electrolytic cell 2 and allow the circulation between the individual elementary cells 5 of a fluid constituted by the electrolytic substance 6 and gasses produced on the electrodes 3 during the operation of the electrolytic cell 2 as a whole.

The fluid, preferably but not necessarily moved by means for actuating the forced circulation, crossing through all the elementary cells 5 drags towards the exterior of the electrolytic cell 2 the gasses developed on the planar electrodes 3 and simultaneously cools all the elementary cells 5. It is convenient for such circulation to take place in the natural direction, i.e. from bottom to top in Figure 2, as shown by arrow 200.

In order to render more effective the cooling of the elementary cells 5, the planar electrodes 3 are positioned inside the electrolytic cell 2 in such a way as to present the holes 9 out of alignment. This forces the fluid to travel along labyrinth like curved paths, which allow for a more intensive mixing of the electrolytic substance contained in the individual elementary cells 5 and a consequent increase in the cooling effect and hence in the efficiency of the elementary cells 5.

Figure 3 shows an embodiment of the electrodes 3 that comprises a plurality of holes 9 uniformly distributed along the periphery of the electrodes 3 and possibly also provided with a central hole 9. Such a realisation allows to have a very regular fluid circulation among the various elementary cells 5, particularly advantageous in the apparatuses 1 wherein - differently from what is shown in the drawings - the electrolytic cell 2 is oriented horizontally, with the electrodes 3 instead oriented vertically.

The electrolytic apparatus 1 comprises, downstream of the electrolytic cell 2, a vertical gas separator 11 which is connected to the electrolytic cell by means of an interposed fluid conveyor 12 that connects the electrolytic cell with the lower part 14 of the separator 11. The electrolytic substance 6 that flows out of the electrolytic cell 2 is then conducted into the separator 11 where the gasses contained in the fluid are separated thanks to their difference in density from the electrolytic substance 6 and are collected in correspondence with the top 13 of the vertical separator 11. The electrolytic substance 6 that instead is collected on the bottom part 14 of the separator 11 is drawn by a pump 10, belonging to the circulatory means, and sent through a lower conveyor 121 back to the electrolytic cell 2.

The vertical separator 11 is also provided with a single sensor 15 for sensing the level of the electrolytic substance 6 and able to assure, for the reasons that shall become more readily apparent farther on, the complete filling of the electrolytic cell 2 and, consequently, of all its elementary cells 5 comprising it.

The electrolytic apparatus 1 further comprises a cooler 16 of the electrolytic substance 6 which can be positioned upstream or downstream of the vertical separator 11, with reference to the direction of circulation 200 of the electrolytic substance 6.

The solution that provides for positioning the cooler 16 upstream of the separator 11 and on the upper conveyor 12 is preferable, since it does not need the provision of means to evacuate condensation, as is necessary when the cooler 16 is mounted on the lower conveyer 121, upstream of the pump 10.

The electrolytic apparatus 1 further comprises a single circuit 17 for refilling the electrolytic substance 6 consumed during the gas production process. This circuit 17 is interconnected with the vertical separator 11 in such a way as to allow the restoration of the level of the electrolytic substance 6 by the activation of a pump 18 with the consent of a sensor 15.

The sensor 15 can be embodied by a simple optical indicator that allows an operator to verify the electrolyte level contained inside the separator 11 and consequently to activate the pump 18 to refill the level whenever it is insufficient.

Should it be desired to automate the activation of the pump 18, it would be necessary to place on the vertical separator 11 a magnetic switch mounted on a float contained in a tube 201 inside the separator 11 and connected to the pump 18 by suitable electrical connection means 151.

On the lower conveyor 121, positioned to connect the separator 11 with the electrolytic cell 2, the apparatus 1 further comprises a device 202 for measuring the pH of the electrolytic substance 6 and a cock 203 for draining the electrolytic substance 6 itself. The electrolytic apparatus described above is suitable for numerous uses, all falling within the scope of the inventive concept.

It can be observed that from the top 13 of the separator 11 the gasses can reach conventional withdrawal means 25 after traversing a scrubber 204 provided at its bottom with a check valve 205.

From the withdrawal means 25 the gasses in the mixture can reach a molecular separator 20 within which they are separated and sent towards distinct storage tanks, not shown in the figure because they do not pertain to the invention.

It should be highlighted that in this case, with respect to traditional systems, the invention allows for considerable plant simplification deriving from the practical possibility of eliminating the complex and costly gas compression apparatus with which traditional plants are provided In this case, the electrolytic cell 2 itself as a whole behaves as a fluid pump able to allow the pressurisation of the entire electrolytic apparatus 1; consequently, all the components of the cell should be built to withstand the pressure. For this purpose the electrolytic cell 2 should provide, internally to the dielectric material rings 17 corresponding reinforcement rings 21 made for instance of teflon or other materials with similar characteristics able to provide the electrolytic cell 2 with the necessary mechanical resistance to the pressurisation of the elementary cells 5.

In a different use, the apparatus 1 can be connected to a conventional welding blow pipe 191 fitted with means for arresting the flame blow back towards the apparatus 1 which can be embodied for instance by a mesh filter, by an excess pressure reducer, or yet more simply by a chamber 206 interposed and connected to the blow pipe 191 and to the apparatus 1 and communicating therewith by means of related passage sections for the gas having different amplitude, the lesser passage section being the one that puts in communication the chamber 206 with the apparatus 1, whilst the larger section connects the chamber 206 to the blow pipe 191.

The apparatus 1 can be associated with a line for conveying the propane gas coupled in parallel on the blow pipe 191, which conventionally comprises a tank 211, a pressure reducer 210 and a maximum pressure solenoid valve 209. Propane combustion provides a reducing flame which can be employed as an alternative to the oxidising flame generated by the oxygen hydrogen reaction and possibly in combination thereof to diminish its oxidising power.

The invention therefore fully attains the aims described above; it is clearly suitable for industrial application and it can be subject to numerous modifications and variations, without thereby departing from the scope of the inventive concept. Moreover, all components can be replaced by technically equivalent elements.

## Claims

1. Electrolytic apparatus for the production of gas comprising a cell (2) having electrically isolated walls (4), containing an electrolytic substance and a plurality of planar electrodes (3), able to be polarised, electrically connected in series and isolated from the walls (4) of the cell (2), said planar electrodes (3) being positioned in the cell (2) in such a way as to subdivide it into a plurality of adjacent elementary cells (5), characterised in that the planar electrodes (3) are traversed by at least a hole (9) obtained in an area lapped by the electrolytic substance (6) to put in communication the elementary cells (5) contiguous to each electrode (3) and allow the electrolytic substance (6) to circulate between the elementary cells (5) and to cool the electrolytic cell (2).

2. Apparatus, according to claim 1, characterised in that the holes (9) of the electrodes (3) are mutually offset in order to impose a curvilinear path to the fluid traversing said cell (2).

3. Apparatus, according to claim 1, characterised in that each electrode (3) is provided with a plurality of said holes (9).

4. Apparatus, according to claim 3, characterised in that said plurality of holes (9) includes a hole positioned centrally to the electrode (3) to favour the passage of the electrolytic substance (6) between the contiguous elementary cells (5) when the cell (2) is positioned with the electrodes (3) oriented vertically.

5. Apparatus, according to claim 1 or 2, characterised in that the cell (2) comprises a number of said elementary cells (5) such as to determine a potential drop between the related electrodes (3) equal to the thermodynamic decomposition potential of the electrolytic substance (6).

6. Apparatus, according to claim 1, characterised in that it comprises a single sensor (15) for sensing the electrolytic substance (6) for all the elementary cells (5).

7. Apparatus, according to claim 1, characterised in that it comprises a vertical gas separator (11), positioned downstream of the electrolytic cell (2) and interconnected thereto by means of a conveyor (12) of the fluid flowing out of the electrolytic cell (2), said separator (11) being able to allow the gasses contained internally to the fluid to separate due to its difference in density from the electrolytic substance (6).

8. Apparatus, according to claim 7, characterised in that it comprises a cooler (16) positioned between the separator (11) and the electrolytic cell (2) to cool the electrolytic substance (6) before its introduction into the cell (2).

9. Apparatus, according to claim 7, characterised in that it comprises a cooler (16) positioned between the electrolytic cell (2) and the separator (11) to cool the fluid which, flowing out of the electrolytic cell (2), travels through the conveyor (12) related thereto.

10. Apparatus, according to one of the claims from 7 to 9, characterised in that the conveyor (12) is connected to the separator (11) in correspondence with its lower part to allow the separation by the bubbling through of the gasses from the electrolytic substance (6).

11. Apparatus according to claim 8, characterised in that it comprises means for indicating the level of the electrolytic substance contained in the cell (2) which are positioned externally to the electrolytic cell (2).

12. Apparatus, according to claim 11, characterised in that the indicator means comprise a single level sensor (15) associated to the gas separator (11).

13. Apparatus, according to claim 12, characterised in that the level sensor (15) includes a float-actuated electrical switch housed in a tube (201) positioned inside the separator (11).

14. Apparatus, according to claim 8, characterised in that it comprises a conveyor (121) which connects the separator (11) with the cell (2) in closed circuit to recirculate therein the electrolytic substance contained in the separator (11).

15. Apparatus, according to claim 14, characterised in that it comprises means (202) for measuring the pH of the electrolytic substance (6) mounted on the conveyor (121) connecting the separator (11) with the cell (2).

16. Apparatus, according to claim 15, characterised in that it comprises a cock (203) mounted on the conveyor (121) to discharge the electrolytic substance outwards (6).

17. Apparatus, according to claim 1, characterised in that the electrodes (3) are oriented horizontally and stacked vertically within the cell (2); and in that it comprises rings (7) made of dielectric material interposed between contiguous electrodes (3) to distance them from each other and delimit in combination with the walls (4) of the cell (2) the individual elementary cells (5).

18. Apparatus, according to claim 17, characterised in that the electrolytic cell (2) is provided with reinforcing rings (21), located inside the rings (7) made of dielectric material, to allow the cell (2) to withstand pressurisation.

19. Apparatus, according to claim 1, characterised in that it comprises actuator means (10) to activate the circulation of the fluid between the elementary cells (5) of the cell (2).

20. Apparatus, according to claim 19, characterised in that the actuator means comprise a pump (10) to activate the forced circulation of the fluid through the elementary cells (5) of the cell (2).

21. Apparatus, according to claim 7, characterised in that it comprise a molecular gas separator (20) which receives from the vertical separator (11) a flow of mixed gas that it separates into at least two distinct flows of component gasses.

22. Apparatus, according to claim 1, characterised in that it comprises a single re-integrator circuit (17) to re-integrate the electrolytic substance (6) inside all the elementary cells (5) of said cell (2).

23. Apparatus, according to any one of the previous claims, characterised in that the electrolytic substance (6) is water.

24. Apparatus according to any of the previous claims, comprising welding means using a blow pipe (19) fed with the gas produced by the apparatus, connected with means for arresting the flame blow back, characterised in that the means for arresting the flame blow back comprise a chamber (206) interposed and connected to the blow pipe (191) and to the apparatus (1) and communicating therewith by means of related sections for the passage of the gas having different amplitude, the lesser passage section placing in communication the chamber (206) with the apparatus (1).
